# DEMANDE DE BREVET EUROPEEN

(11) **EP 3 332 893 A1**
(43) Date de publication de la demande: **13.06.2018**
(21) Numéro de dépôt: 17205217.7
(22) Date de dépôt: 04.12.2017
(51) Int. Cl.: B22F 1/00, B22F 1/02, B22F 9/24

(54) **PROCÉDÉS DE FABRICATION DE NANOPARTICULES MÉTALLIQUES REVÊTUES ET D'UN MATÉRIAU COMPOSITE LES COMPRENANT, UTILISATION D'UN TEL MATÉRIAU ET DISPOSITIF LE COMPRENANT**

(30) Priorité: 06.12.2016 FR 1661979
(71) Demandeur: Commissariat à l'énergie atomique et aux énergies alternatives, 75015 Paris (FR)
(72) Inventeur: BENWADIH, Mohammed, 94500 CHAMPIGNY SUR MARNE (FR); BABLET, Jacqueline, 38450 LE GUA (FR); PONCELET, Olivier, 38000 GRENOBLE (FR); SKRZYPSKI, Jonathan, 89250 GURGY (FR)
(74) Mandataire: Brevalex

(57) **Abrégé**

L'invention se rapporte à un procédé de préparation de nanoparticules métalliques revêtues.

Selon l'invention, chaque nanoparticule comprenant un coeur constitué d'au moins un métal M et une couche constituée d'au moins un polymère, la couche revêtant le coeur métallique, lequel procédé comprend les étapes suivantes :
(a₁) la préparation d'une solution A comprenant :
• ledit au moins un métal M sous la forme de cations Mⁿ⁺, n étant un nombre entier compris entre 1 et 3, chaque métal M étant un métal de transition de numéro atomique compris entre 21 et 30,
• un polyol, et
• un sel d'un métal noble,

(a₂) la préparation d'une solution B comprenant au moins un monomère organique dudit au moins un polymère, dans un solvant organique,
(b) le mélange des solutions A et B, ce mélange étant porté à la température d'ébullition du polyol, et
(c) la récupération des nanoparticules métalliques revêtues.

L'invention se rapporte également à un procédé de fabrication et aux utilisations d'un matériau composite comprenant ces nanoparticules métalliques revêtues ainsi qu'à une antenne comprenant ce matériau composite.

## Description

### DOMAINE TECHNIQUE

L'invention se rapporte à un procédé de préparation de nanoparticules métalliques revêtues, ces nanoparticules présentant des propriétés magnétiques et diélectriques.

L'invention se rapporte également à un procédé de fabrication d'un matériau composite obtenu à partir d'une formulation comprenant ces nanoparticules métalliques revêtues dispersées dans une matrice polymérique.

L'invention se rapporte également aux utilisations du matériau composite tel qu'obtenu par ce procédé de fabrication ainsi qu'à un dispositif, électronique ou radiofréquence, comprenant ce matériau composite.

### ÉTAT DE LA TECHNIQUE ANTÉRIEURE

Face à la miniaturisation et devant la volonté d'intégrer un nombre toujours plus important d'applications nouvelles au sein d'un même système de communication sans fil, tel qu'un terminal mobile, la diminution de la taille de ses éléments constitutifs, notamment de celle de l'antenne, devient un enjeu important.

Les dimensions d'une telle antenne étant inversement proportionnelles au produit de la permittivité diélectrique relative, notée εᵣ, et de la perméabilité magnétique relative, notée µᵣ, la diminution de la taille de l'antenne passe généralement par l'utilisation de matériaux purement diélectriques à forte permittivité.

Toutefois, l'utilisation de tels matériaux diélectriques se fait au détriment de certaines des performances de l'antenne, parmi lesquelles sa bande passante.

Pour remédier à la baisse des performances de la bande passante, il a été proposé d'utiliser des matériaux associant une perméabilité magnétique à la permittivité diélectrique et, en particulier, des matériaux dits "matériaux composites", "matériaux magnétiques et diélectriques" ou "matériaux magnéto-diélectriques". C'est l'expression de "matériau(x) composite(s)" qui sera utilisée dans la suite de la présente description.

Ces matériaux composites sont classiquement obtenus à partir d'une formulation comprenant une matrice polymérique et des particules dispersées dans la matrice polymérique.

Classiquement, les particules dispersées dans la matrice polymérique sont des nanoparticules inorganiques, le terme "nanoparticules" définissant des particules dont les trois dimensions sont comprises entre 1 nm et 1000 nm.

Les propriétés du matériau composite peuvent ainsi être ajustées à façon, notamment en fonction de la nature de ces nanoparticules dispersées dans la matrice polymérique.

On peut notamment se référer au document WO 2007/106771 A2, référencé **[1]** dans la suite de la présente description, qui dresse un état des lieux des nombreuses voies explorées tant pour la fabrication de tels matériaux composites que pour la préparation de nanoparticules spécifiques.

En particulier, l'utilisation de nanoparticules d'un métal de transition de la série 3d, et/ou de ses alliages métalliques, confère audit matériau composite une bonne perméabilité magnétique mais une faible permittivité diélectrique.

En effet, en raison de leurs propriétés magnétiques, ces nanoparticules métalliques ont tendance à s'agglomérer entre elles. De tels agglomérats de nanoparticules étant particulièrement difficiles à disperser dans un solvant ou dans une matrice polymérique, il devient pratiquement impossible de former des couches de matériau composite présentant une répartition homogène de ces nanoparticules. De surcroît, la présence de ces agglomérats peut favoriser la circulation d'un courant électrique entre les nanoparticules présentes dans le matériau composite et, ainsi, provoquer des courts-circuits au sein d'une même couche de matériau composite, voire entre les différentes couches d'une même structure multicouche.

De surcroît, l'expérience montre que des films d'un matériau composite obtenu à partir d'une formulation comprenant de tels agglomérats de nanoparticules métalliques dans une matrice polymérique se caractérisent par un manque de cohésion et de résistance mécanique.

Le but de l'invention est, par conséquent, de pallier les inconvénients des matériaux composites de l'art antérieur, et de proposer un procédé de préparation de nanoparticules qui, une fois dispersées dans une matrice polymérique, forment avec cette matrice une formulation permettant d'obtenir un matériau composite qui présente une perméabilité magnétique comparable à celle des matériaux composites de l'art antérieur, typiquement d'au moins 1, ainsi que des propriétés mécaniques et une permittivité diélectrique qui soient toutes deux supérieures à celles de ces matériaux composites de l'art antérieur, la permittivité diélectrique étant d'au moins 2, cette permittivité diélectrique étant avantageusement d'au moins 3 et, préférentiellement, d'au moins 4.

Un autre but de l'invention est donc de proposer un procédé de fabrication d'un tel matériau composite, ce matériau composite devant notamment permettre de réaliser des antennes qui présentent un encombrement qui soit le plus faible possible sans que leurs propriétés, et notamment leur bande passante, ne se trouvent altérées.

### EXPOSÉ DE L'INVENTION

Ces buts ainsi que d'autres encore sont atteints, en premier lieu, par un procédé de préparation de nanoparticules métalliques revêtues, chaque nanoparticule comprenant un coeur constitué d'au moins un métal M et une couche constituée d'au moins un polymère, la couche revêtant le coeur métallique.

Selon l'invention, le procédé comprend les étapes suivantes :
(a₁) la préparation d'une solution A comprenant :
   - ledit au moins un métal M sous la forme de cations Mⁿ⁺, n étant un nombre entier compris entre 1 et 3, chaque métal M étant un métal de transition de numéro atomique compris entre 21 et 30,
   - un polyol, et
   - un sel d'un métal noble,
(a₂) la préparation d'une solution B comprenant au moins un monomère organique dudit au moins un polymère, dans un solvant organique,
(b) le mélange des solutions A et B, ce mélange étant porté à la température d'ébullition du polyol, moyennant quoi on obtient des nanoparticules métalliques revêtues, et
(c) la récupération des nanoparticules métalliques revêtues.

Dans ce qui précède et dans ce qui suit, on entend, par "nanoparticules", des particules dont les trois dimensions sont comprises entre 1 nm et 1000 nm.

De la même manière, l'expression "compris entre ... et ..." qui vient d'être utilisée pour définir un intervalle et qui est utilisée dans la suite de la présente demande, doit être comprise comme définissant non seulement les valeurs de l'intervalle, mais également les valeurs des bornes de cet intervalle.

Les nanoparticules métalliques revêtues telles que préparées par le procédé selon l'invention présentent concomitamment des propriétés magnétiques, conférées par le métal ou l'alliage métallique formant le coeur de ces nanoparticules, et des propriétés diélectriques, conférées par le polymère ou l'alliage polymérique formant la couche desdites nanoparticules, étant précisé que cette couche polymérique revêt le coeur métallique de manière à être en contact avec ce coeur et à l'enrober.

Ainsi, et comme on le verra ci-après, le matériau composite, qui est préparé à partir d'une formulation comprenant ces nanoparticules métalliques revêtues dispersées dans une matrice polymérique, présente concomitamment une perméabilité magnétique et une permittivité diélectrique, ainsi que de bonnes propriétés mécaniques.

Le procédé de préparation de nanoparticules métalliques revêtues selon l'invention comprend une étape (a₁) au cours de laquelle on procède à la préparation d'une solution A comprenant au moins un métal M sous la forme de cations Mⁿ⁺, un polyol et un sel d'un métal noble.

Cette solution A peut ne comprendre qu'un seul métal M sous forme cationique, mais elle peut également comprendre plusieurs métaux M sous forme cationique, c'est-à-dire comprendre un mélange de deux, trois, voire plus, métaux M₁, M₂, M₃... distincts, ces métaux étant tous sous forme cationique.

La solution A préparée lors de l'étape (a₁) comprend ledit au moins un métal M sous la forme de cations Mⁿ⁺, avec n étant un nombre entier compris entre 1 et 3.

S'il est plus particulièrement envisagé que la solution A comprenne un ou plusieurs métaux M sous une seule de leurs formes cationiques, rien n'interdit d'envisager que cette solution A comprenne ce ou ces métaux M sous plusieurs de leurs formes cationiques.

Dans une variante avantageuse de l'invention, la solution A comprend ledit au moins métal M sous la forme de cations M²⁺, correspondant au cas où n=2.

Que la solution A comprenne un seul métal M ou plusieurs métaux M, que ce ou ces métaux M soient sous une seule forme cationique ou sous plusieurs de leurs formes cationiques, chaque métal M est un métal de transition possédant un numéro atomique compris entre 21 et 30, correspondant ainsi à un métal de transition de la série 3d.

Dans une variante préférentielle de l'invention, chaque métal de transition M est choisi dans le groupe constitué par Ni, Fe et Co.

Le coeur métallique de chaque nanoparticule peut ainsi être notamment constitué par un seul de ces métaux, qui peut alors être Ni, Fe ou Co, par un alliage de deux de ces métaux, cet alliage pouvant alors être un alliage de Ni-Fe, Co-Ni ou Fe-Co, ou par un alliage de ces trois métaux, c'est-à-dire un alliage Ni-Fe-Co.

Dans une variante plus préférentielle, le coeur métallique de chaque nanoparticule est constitué par un alliage Co-Ni.

S'il est bien entendu envisageable de préparer des nanoparticules dont le coeur métallique peut comprendre tout rapport molaire Co/Ni, on privilégiera toutefois un rapport molaire Co/Ni compris entre 50/50 et 90/10 pour obtenir des nanoparticules dont la morphologie se rapproche de celle de bâtonnets.

Ce rapport molaire Co/Ni est avantageusement compris entre 70/30 et 85/15 et est, préférentiellement, de l'ordre de 80/20.

Dans un mode de réalisation de l'invention, ledit au moins un métal M sous la forme de cations Mⁿ⁺ est un sel métallique.

Dans une variante avantageuse de l'invention, ce sel métallique comprend au moins un élément choisi dans le groupe constitué par un acétate, un acétylacétonate, un hydroxyde et un oxyde du métal de transition M.

Dans une variante préférentielle de l'invention, ce sel métallique est un acétate du métal de transition M, un tel acétate pouvant être anhydre ou hydraté.

À titre d'exemples d'acétates du métal de transition M, on peut notamment citer un acétate de nickel Ni(CH₃COO)₂, un acétate de fer Fe(CH₃COO)₂ ou encore un acétate de cobalt Co(CH₃COO)₂.

À titre d'exemples d'acétylacétonates du métal de transition M, on peut notamment citer un acétylacétonate de nickel, un acétylacétonate de fer ou encore un acétylacétonate de cobalt.

Dans un mode de réalisation de l'invention, la concentration molaire en cations Mⁿ⁺, notée [Mⁿ⁺], dans la solution A, est comprise entre 0,02 mol/L et 1 mol/L.

Dans une variante avantageuse de l'invention, cette concentration molaire [Mⁿ⁺] est comprise entre 0,04 mol/L et 0,5 mol/L et, préférentiellement, entre 0,06 mol/L et 0,1 mol/L.

En plus du ou des métaux M sous la forme de cations Mⁿ⁺, la solution A mise en oeuvre lors de l'étape (a₁) comprend un solvant, en l'espèce un polyol, et un agent nucléant, en l'espèce un sel de métal noble.

Dans ce qui précède, on entend par "métal noble", l'un des huit métaux suivants : l'or, l'argent, le rhodium, l'osmium, le palladium, le ruthénium, l'iridium et le platine.

Dans un mode de réalisation de l'invention, le métal noble est choisi parmi l'osmium, le ruthénium et l'iridium.

Les polyols sont des solvants polaires protiques qui permettent de dissoudre au moins partiellement les sels métalliques et, en particulier, les acétates du métal de transition M décrits ci-dessus.

Dans un mode de réalisation de l'invention, le polyol est un diol, avantageusement un α-diol.

À titre d'exemples non limitatifs d'α-diols, on peut notamment citer l'éthane-1,2-diol, également connu sous l'appellation d'éthylène glycol, le propane-1,2-diol ou encore le butane-1,2-diol.

Le sel de métal noble dont le rôle est précisé ci-dessous peut notamment être choisi parmi le chlorure d'osmium, le chlorure de ruthénium et le chlorure d'iridium.

Dans un mode de réalisation de l'invention, le rapport entre la concentration molaire de métal noble et la concentration molaire de cations Mⁿ⁺, noté [métal noble] / [Mⁿ⁺], est compris entre 0,005 et 0,1.

Dans un mode de réalisation avantageux de l'invention, ce rapport de concentrations molaires [métal noble] / [Mⁿ⁺] est compris entre 0,01 et 0,05 et, préférentiellement, entre 0,02 et 0,03.

Dans un mode de réalisation de l'invention, la solution A peut comprendre, en outre, de l'hydroxyde de sodium, dans une concentration molaire [NaOH] d'au plus 0,5 mol/L.

Dans une variante avantageuse de l'invention, cette concentration molaire [NaOH] est comprise entre 0,05 mol/L et 0,4 mol/L et, préférentiellement, entre 0,1 mol/L et 0,3 mol/L.

Dans un mode de réalisation de l'invention, l'étape (a₁) de préparation de la solution A est conduite à une température qui est strictement inférieure à la température d'ébullition du polyol présent dans cette solution A.

Dans une variante avantageuse, la température à laquelle est préparée la solution A est comprise entre 0 °C et 30 °C et, préférentiellement, entre 15 °C et 25 °C, ce dernier intervalle correspondant à la température ambiante.

Le procédé de préparation de nanoparticules métalliques revêtues selon l'invention comprend également une étape (a₂) au cours de laquelle on procède à la préparation d'une solution B comprenant au moins un monomère organique dudit au moins un polymère, dans un solvant organique.

La solution B peut ne comprendre qu'un seul monomère organique, auquel cas, après polymérisation, on obtient un homopolymère. Mais rien n'interdit d'envisager que la solution B comprenne deux, trois, voire plus, monomères, auquel cas on obtient, après polymérisation, un copolymère.

Dans un mode de réalisation de l'invention, ce ou ces monomères organiques peuvent notamment être choisis dans le groupe constitué par le styrène, un (méth)acrylate d'alkyle, un monomère fluorocarboné, le norbornène et l'éthylène.

Par l'expression "(méth)acrylate d'alkyle", on vise aussi bien un acrylate d'alkyle qu'un méthacrylate d'alkyle.

Le monomère (méth)acrylate d'alkyle peut notamment être choisi parmi le (méth)acrylate de méthyle, le (méth)acrylate d'éthyle, le (méth)acrylate de *n*-butyle, le (méth)acrylate d'isobutyle, le (méth)acrylate d'octyle et le (méth)acrylate de 2-éthylhexyle. Ce monomère (méth)acrylate d'alkyle est avantageusement le méthacrylate de méthyle, noté MMA.

Dans une variante avantageuse de l'invention, la solution B ne comprend qu'un seul monomère, ce monomère pouvant notamment être le méthacrylate de méthyle MMA, le styrène, le norbornène ou l'éthylène qui, après polymérisation, conduisent respectivement au poly(méthacrylate de méthyle) ou PMMA, au polystyrène, au polynorbornène ou au polyéthylène.

La solution B comprend également un solvant organique dans lequel le ou les monomères organiques se trouvent en solution.

À titre d'exemples, on pourra choisir du tétrahydrofurane (THF) ou du chloroforme pour solubiliser le styrène.

Dans un mode de réalisation de l'invention, l'étape (a₂) de préparation de la solution B est conduite à la température ambiante, c'est-à-dire à une température typiquement comprise entre 15 °C et 25 °C.

Les étapes (a₁) et (a₂) de préparation des solutions A et B peuvent être réalisées l'une après l'autre ou concomitamment.

Le procédé de préparation de nanoparticules métalliques revêtues selon l'invention comprend également une étape (b) au cours de laquelle on procède au mélange des solutions A et B préparées lors des étapes (a₁) et (a₂).

Cette étape (b) de mélange des solutions A et B est conduite à une température correspondant à la température d'ébullition du polyol présent dans la solution A.

Lors de cette étape (b) de mélange des solutions A et B se produit concomitamment :
- la dissolution totale du composé comprenant le ou les métaux M sous la forme de cations Mⁿ⁺,
- la réduction des cations Mⁿ⁺ en ledit au moins un métal M à son degré d'oxydation 0, noté M⁰, selon la réaction suivante :

   Mⁿ⁺ + ne⁻ → M⁰,

   et, ce faisant, la formation du coeur métallique de chacune des nanoparticules
- la croissance de ce coeur métallique,
- la formation de la couche polymérique autour de ce coeur métallique par polymérisation du ou des monomères présents dans le mélange et, ce faisant, l'obtention des nanoparticules métalliques revêtues.

Les nanoparticules métalliques revêtues telles qu'obtenues à l'issue de l'étape (b) de mélange se présentent sous la forme de nanoparticules solides dans la solution.

L'utilisation d'un α-diol comme polyol présente plusieurs avantages du fait du caractère polaire et réducteur de ces α-diols et de leur point d'ébullition élevé. On peut ainsi solubiliser un grand nombre de sels métalliques comprenant le ou les métaux M sous forme cationique et réduire les cations correspondants à une température qui est ajustable dans un intervalle de températures assez large.

La réduction des cations Mⁿ⁺ en métal ou métaux M⁰ s'effectue donc directement en solution.

Le métal noble, qui se trouve aussi sous forme cationique dans le sel de métal noble présent dans la solution A, est également réduit lors de l'étape (b) de mélange et va ainsi former des germes qui vont servir de sites de croissance, ou sites de nucléation, pour le coeur métallique. Le contrôle de la taille des nanoparticules est assuré par le rapport molaire [métal noble] / [Mⁿ⁺].

Pour favoriser cette réaction de réduction de manière à la rendre la plus quantitative possible, on peut introduire, dans la solution A, de l'hydroxyde de sodium.

La couche de polymère(s) qui se forme autour des nanoparticules est obtenue par polymérisation en solution du ou des monomères organiques initialement présents dans la solution B, cette polymérisation étant catalysée par le sel de métal noble initialement présent dans la solution A.

Il est à noter que la morphologie des nanoparticules métalliques revêtues telles qu'obtenues à l'issue de l'étape (b) de mélange peut être modulée en fonction des composés présents dans la solution A et de leur concentration molaire.

Dans un mode de réalisation particulièrement privilégié de l'invention, qui permet d'obtenir des nanoparticules comprenant un coeur métallique constitué par un alliage de Co-Ni et présentant une morphologie de bâtonnets, la solution A comprend un acétate de cobalt, un acétate de nickel, du butane-1,2-diol, de l'hydroxyde de sodium, et du trichlorure de ruthénium, dans les conditions suivantes :
- un rapport molaire Co/Ni compris entre 50/50 et 90/10,
- une concentration molaire [Co+Ni] comprise entre 0,02 mol/L et 1 mol/L,
- un rapport molaire [Ru]/[Co+Ni] compris entre 0,005 et 0,1, et
- une concentration molaire en NaOH [NaOH] comprise entre 0,05 mol/L et 0,5 mol/L.

Le procédé de préparation de nanoparticules métalliques revêtues selon l'invention comprend, après l'étape (b) de mélange des solutions A et B, une étape (c) au cours de laquelle on procède à la récupération des nanoparticules métalliques revêtues, ces dernières pouvant alors faire l'objet d'utilisations ultérieures.

Cette étape (c) de récupération peut être opérée par toute technique habituelle utilisée pour la séparation d'un solide et d'un liquide, telle que la filtration, la centrifugation,...

L'invention se rapporte, en deuxième lieu, à un procédé de fabrication d'un matériau composite.

Selon l'invention, ce procédé de fabrication comprend les étapes (1) à (4) suivantes :
(1) une préparation de nanoparticules métalliques revêtues, chaque nanoparticule comprenant un coeur constitué d'au moins un métal M et une couche constituée d'au moins un polymère, la couche revêtant le coeur métallique, par la mise en oeuvre du procédé de préparation tel que défini ci-avant,
(2) un mélange des nanoparticules préparées à l'étape (1) dans une matrice polymérique, moyennant quoi on obtient une formulation comprenant les nanoparticules dispersées dans la matrice polymérique,
(3) un dépôt de la formulation obtenue à l'issue de l'étape (3), et
(4) une application d'une énergie à la formulation déposée à l'étape (3), moyennant quoi on obtient le matériau composite.

Les caractéristiques décrites précédemment en liaison avec le procédé de préparation des nanoparticules métalliques revêtues, notamment la composition des solutions A et B ainsi que les caractéristiques relatives aux nanoparticules métalliques revêtues et aux polymères susceptibles d'être utilisés dans la matrice polymérique, sont bien entendu applicables au présent procédé de fabrication.

Le procédé de fabrication selon l'invention est donc de mise en oeuvre particulièrement aisée, les nanoparticules préparées lors de l'étape (1) pouvant être directement incorporées et dispersées dans la matrice polymérique.

L'étape (2) consiste à obtenir, par mélange et/ou malaxage, une formulation se caractérisant par une distribution des nanoparticules métalliques revêtues dans la matrice polymérique qui soit la plus homogène possible.

Selon un mode particulier de réalisation de l'invention, la proportion massique en nanoparticules métalliques revêtues, par rapport à la masse totale de la formulation, est comprise entre 10% et 50%, avantageusement entre 15% et 45% et, préférentiellement, entre 20% et 40%.

De nombreux polymères peuvent être envisagés pour la matrice polymérique de la formulation à partir de laquelle est obtenu le matériau composite conforme à l'invention.

Cette matrice polymérique peut notamment comprendre au moins un polymère choisi dans le groupe constitué par un polymère thermodurcissable, un polymère thermoplastique et un élastomère, ce polymère pouvant être seul ou en mélange sous la forme d'un alliage.

Dans une variante avantageuse, la matrice polymérique comprend au moins un polymère thermoplastique, qui peut notamment être choisi dans le groupe constitué par un polystyrène, un poly(méthacrylate de méthyle), un polymère fluorocarboné, un polynorbornène et un polyéthylène, ce polymère étant de préférence un polystyrène.

Dans une variante préférentielle, le polymère formant la couche de chaque nanoparticule et le polymère de la matrice polymérique sont identiques, de manière à favoriser les propriétés du matériau composite, en particulier sa cohésion et sa résistance mécanique.

L'étape (3) de dépôt de la formulation peut être réalisée par toute technique connue et, entre autres, par dépôt à la tournette (en anglais, spin coating), sérigraphie, héliogravure, pulvérisation...

L'étape (4) d'application d'une énergie est classiquement réalisée par un traitement thermique de la formulation déposée lors de l'étape (3), éventuellement combiné à des rayonnements ionisants, afin de permettre la polymérisation du ou des polymères formant la matrice de la formulation.

L'invention se rapporte, en troisième lieu, à des utilisations du matériau composite tel que défini ci-dessus, les caractéristiques avantageuses de ce matériau composite pouvant être prises seules ou en combinaison.

Le matériau composite selon l'invention peut être notamment utilisé pour former un film ou bien une couche magnétique et diélectrique, ce film ou cette couche étant notamment destiné(e) à un dispositif électronique ou à un dispositif radiofréquence, tel qu'une antenne.

Ce dispositif radiofréquence peut notamment être adapté à la haute fréquence, la "haute fréquence" étant définie par une fréquence comprise entre 10 MHz et 3 GHz.

L'invention se rapporte, en quatrième lieu, à un dispositif électronique ou à un dispositif radiofréquence.

Selon l'invention, ce dispositif, qu'il soit électronique ou radiofréquence, comprend, comme matériau diélectrique, un matériau composite tel que défini ci-dessus, les caractéristiques avantageuses de ce matériau composite pouvant être prises seules ou en combinaison.

Le dispositif radiofréquence peut notamment être une antenne, en particulier une antenne destinée à un objet communicant, tel qu'un téléphone portable.

On observe, en effet, que la présence d'un matériau composite dans une telle antenne permet de remédier à la réduction de bande passante que l'on observe avec les matériaux composites utilisés à ce jour.

D'autres caractéristiques et avantages de l'invention apparaîtront mieux à la lecture du complément de description qui suit et qui se rapporte à deux exemples de préparation de nanoparticules Co-Ni, dont l'un conforme à l'invention.

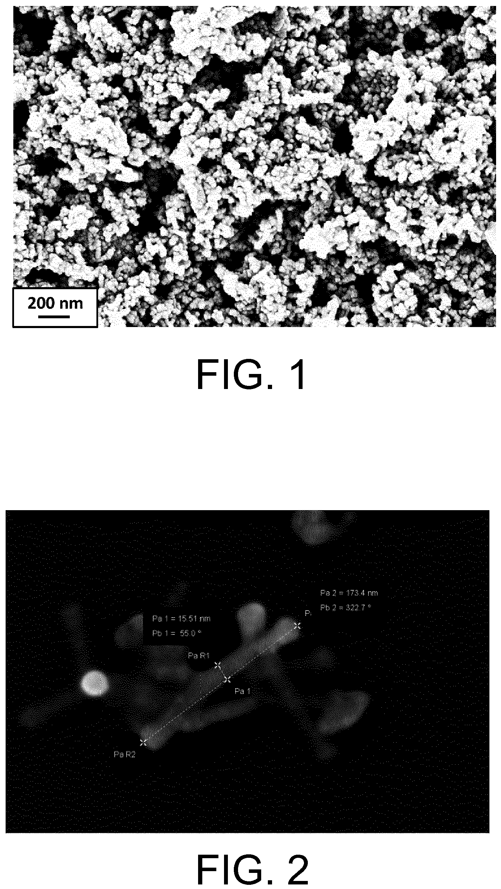

Il est précisé que ce complément de description, qui se réfère notamment aux figures 1 et 2 telles qu'annexées, n'est donné qu'à titre d'illustration de l'objet de l'invention et ne constitue en aucun cas une limitation de cet objet.

### BRÈVE DESCRIPTION DES DESSINS

La figure 1 correspond à un cliché pris au moyen d'un microscope électronique à balayage (MEB) de nanoparticules Co-Ni non revêtues.
La figure 2 correspond à un cliché pris au moyen d'un microscope électronique à balayage (MEB) de nanoparticules Co-Ni revêtues d'une couche de polystyrène, telles qu'obtenues par la mise en oeuvre du procédé selon l'invention.

### EXPOSÉ DÉTAILLÉ DE MODES DE RÉALISATION PARTICULIERS

### 1. Préparation de nanoparticules Co-Ni non revêtues

Les nanoparticules Co-Ni ont été préparées à partir d'acétate de cobalt tétrahydraté, Co(CH₃COO)₂, 4 H₂O, et d'acétate de nickel tétrahydraté Ni(CH₃COO)₂, 4 H₂O.

1,59 g d'acétate de cobalt tétrahydraté et 0,398 g d'acétate de nickel tétrahydraté ont été dissous dans 100 mL de butane-1,4-diol, dans un rapport molaire Co/Ni de 80/20. Au mélange ainsi obtenu sont ensuite successivement ajoutés 600 mg de pastilles d'hydroxyde de sodium NaOH, de telle sorte à atteindre une concentration molaire de NaOH, dans la solution, de 0,15 mol/L, et 52 mg de trichlorure de ruthénium RuCl₃. La solution résultante présente les caractéristiques suivantes :
- une concentration molaire en cobalt-nickel [Co+Ni] = 0,08 mol/L,
- un rapport molaire [Ru]/[Co+Ni] = 2,5 %, et
- une concentration molaire en NaOH [NaOH] = 0,15 mol/L.

Le mélange réactionnel ainsi obtenu est alors chauffé à 170 °C, sous agitation mécanique, pendant 30 min, temps au bout duquel on obtient une solution de couleur noire.

Les nanoparticules Co-Ni sont ensuite collectées et lavées, à trois reprises, à l'éthanol par centrifugation pendant 5 min et à 8000 tr/min, avant d'être séchées dans une étuve.

En référence à la figure 1, qui correspond au cliché MEB des nanoparticules ainsi préparées, on observe que les nanoparticules obtenues par la mise en oeuvre du procédé de préparation décrit-ci dessus se présentent sous la forme de nanoparticules qui sont agglomérées les unes aux autres. Ces agglomérats présentent une taille comprise entre 30 nm et 60 nm, étant noté que, par analyse complémentaire, il a été déterminé que les nanoparticules elles-mêmes présentent une taille de 2 nm à 3 nm.

On comprend donc aisément qu'un matériau composite qui serait obtenu à partir d'une formulation comprenant les nanoparticules préparées conformément au protocole qui vient d'être décrit ne peut pas présenter une répartition homogène des nanoparticules au sein de la matrice polymérique. Ceci a pour conséquence qu'un courant électrique est susceptible de s'établir, pour le moins au sein au sein de ce matériau composite, voire avec d'autres matériaux avec lesquels il viendrait à être en contact, faisant alors perdre ses propriétés diélectriques à ce matériau composite.

### 2. Préparation de nanoparticules Co-Ni revêtues selon le procédé de l'invention

Les nanoparticules Co-Ni ont été préparées à partir d'acétate de cobalt tétrahydraté, Co(CH₃COO)₂,4 H₂O, et d'acétate de nickel tétrahydraté Ni(CH₃COO)₂,4 H₂O.

Comme dans l'exemple 1 précédent, 1,59 g d'acétate de cobalt tétrahydraté et 0,398 g d'acétate de nickel tétrahydraté ont été dissous dans 100 mL de butane-1,2-diol, dans un rapport molaire Co/Ni de 80/20. Au mélange ainsi obtenu sont ensuite successivement ajoutés 600 mg de pastilles d'hydroxyde de sodium, de telle sorte à atteindre une concentration molaire de NaOH, dans la solution, de 0,15 mol/L, et 52 mg de trichlorure de ruthénium RuCl₃. La solution A résultante présente les caractéristiques suivantes :
- une concentration molaire en cobalt-nickel [Co+Ni] = 0,08 mol/L,
- un rapport molaire [Ru]/[Co+Ni] = 2,5 %, et
- une concentration molaire en NaOH [NaOH] = 0,15 mol/L.

On a préparé deux solutions B comprenant chacune du styrène et du peroxyde de benzoyle (Luperox®) dans le tétrahydrofurane THF sous argon à 25 °C, le ratio monomère/Luperox® étant supérieur à 100 et inférieur 400.

Pour caractériser le polymère qui formera la couche polymérique des nanoparticules Co-Ni, les Inventeurs ont examiné le produit de réaction tel qu'obtenu *in situ* à partir de l'une des deux solutions B : il s'agit d'un polystyrène présentant une masse molaire moyenne en nombre Mn, telle que mesurée par chromatographie par exclusion, de 35000 g/mol.

L'autre solution B est ajoutée à la solution A. Le mélange réactionnel ainsi obtenu est alors chauffé à 170 °C, sous agitation mécanique, pendant 30 min, temps au bout duquel on obtient une solution de couleur noire.

Les nanoparticules métalliques revêtues ainsi obtenues sont ensuite collectées et lavées, à trois reprises, à l'éthanol par centrifugation pendant 5 min et à 8000 tr/min, avant d'être séchées dans une étuve.

En référence à la figure 2, on observe que le cliché MEB montre que les nanoparticules métalliques revêtues telles qu'obtenues par la mise en oeuvre du procédé de préparation selon l'invention se présentent sous la forme de bâtonnets individualisés, d'une longueur moyenne de 200 nm.

Cette longueur des nanoparticules métalliques revêtues est directement liée au temps de réaction du mélange réactionnel. En effet, si un temps de réaction de 30 min permet d'obtenir une longueur moyenne de 200 nm, l'expérience montre qu'un temps de réaction de 10 h permet d'atteindre des longueurs moyennes de nanoparticules métalliques revêtues de 10 µm.

On peut donc, sans aucune difficulté, adapter le temps de réaction à la longueur moyenne des nanoparticules métalliques revêtues que l'on cherche à obtenir.

Les nanoparticules métalliques revêtues telles qu'obtenues par le procédé selon l'invention peuvent alors être introduites dans une matrice polymérique. La formulation ainsi obtenue peut être déposée sur une surface sous la forme d'une couche dans laquelle les nanoparticules sont réparties de manière régulière et selon une même direction. L'enrobage polymérique des nanoparticules permet d'assurer qu'il ne se forme aucun court-circuit dans le matériau composite obtenu après traitement thermique, même dans l'hypothèse où certaines des nanoparticules viendraient à être en contact les unes avec les autres. Le matériau composite présente donc concomitamment des propriétés magnétiques et diélectriques.

### BIBLIOGRAPHIE

[1] WO2007/106771A2

## Revendications

1. Procédé de préparation de nanoparticules métalliques revêtues, chaque nanoparticule comprenant un coeur constitué d'au moins un métal M et une couche constituée d'au moins un polymère, la couche revêtant le coeur métallique, lequel procédé comprend les étapes suivantes :
(a₁) la préparation d'une solution A comprenant :
• ledit au moins un métal M sous la forme de cations Mⁿ⁺, n étant un nombre entier compris entre 1 et 3 et, avantageusement, égal à 2, chaque métal M étant un métal de transition de numéro atomique compris entre 21 et 30,
• un polyol, et
• un sel d'un métal noble,
(a₂) la préparation d'une solution B comprenant au moins un monomère organique dudit au moins un polymère, dans un solvant organique,
(b) le mélange des solutions A et B, ce mélange étant porté à la température d'ébullition du polyol, moyennant quoi on obtient des nanoparticules métalliques revêtues, et
(c) la récupération des nanoparticules métalliques revêtues.

2. Procédé selon la revendication 1, dans lequel chaque métal de transition M est choisi dans le groupe constitué par Ni, Fe et Co.

3. Procédé selon la revendication 2, dans lequel le coeur est constitué par Ni, Fe, Co, Ni-Fe, Co-Ni, Fe-Co ou Ni-Fe-Co.

4. Procédé selon la revendication 3, dans lequel, le coeur étant constitué par un alliage Co-Ni, le rapport molaire Co/Ni est compris entre 50/50 et 90/10, avantageusement entre 70/30 et 85/15 et étant, préférentiellement, de 80/20.

5. Procédé selon l'une quelconque des revendications 1 à 4, dans lequel ledit au moins un métal M sous la forme de cations Mⁿ⁺ est un sel métallique, ce sel métallique comprenant avantageusement au moins un élément choisi dans le groupe constitué par un acétate, un acétylacétonate, un hydroxyde et un oxyde du métal de transition M, ce sel métallique étant, préférentiellement, un acétate du métal de transition M.

6. Procédé selon l'une quelconque des revendications 1 à 5, dans lequel la concentration molaire en cations Mⁿ⁺ [Mⁿ⁺], dans la solution A, est comprise entre 0,02 mol/L et 1 mol/L, avantageusement entre 0,04 mol/L et 0,5 mol/L et, préférentiellement, entre 0,06 mol/L et 0,1 mol/L.

7. Procédé selon l'une quelconque des revendications 1 à 6, dans lequel le polyol est un diol, avantageusement un α-diol et, de préférence, le butane-1,2-diol.

8. Procédé selon l'une quelconque des revendications 1 à 7, dans lequel le sel d'un métal noble est choisi parmi le chlorure d'osmium, le chlorure de ruthénium et le chlorure d'iridium.

9. Procédé selon l'une quelconque des revendications 1 à 8, dans lequel le rapport de concentrations molaires entre le métal noble et les cations Mⁿ⁺, noté [métal noble] / [Mⁿ⁺], est compris entre 0,005 et 0,1, avantageusement entre 0,01 et 0,05 et, préférentiellement, entre 0,02 et 0,03.

10. Procédé selon l'une quelconque des revendications 1 à 9, dans lequel la solution A comprend, en outre, de l'hydroxyde de sodium, dans une concentration molaire [NaOH] d'au plus 0,5 mol/L, avantageusement comprise entre 0,05 mol/L et 0,4 mol/L et, préférentiellement, entre 0,1 mol/L et 0,3 mol/L.

11. Procédé selon l'une quelconque des revendications 1 à 10, dans lequel ledit au moins un monomère organique est choisi dans le groupe constitué par le styrène, un (méth)acrylate d'alkyle, un monomère fluorocarboné, le norbornène et l'éthylène.

12. Procédé de fabrication d'un matériau composite, lequel procédé comprend les étapes suivantes :
(1) une préparation de nanoparticules métalliques revêtues, chaque nanoparticule comprenant un coeur constitué d'au moins un métal M et une couche constituée d'au moins un polymère, la couche revêtant le coeur métallique, par la mise en oeuvre du procédé de préparation selon l'une quelconque des revendications 1 à 11,
(2) un mélange des nanoparticules préparées à l'étape (1) dans une matrice polymérique, moyennant quoi on obtient une formulation comprenant les nanoparticules dispersées dans la matrice polymérique,
(3) un dépôt de la formulation obtenue à l'issue de l'étape (3), et
(4) une application d'une énergie à la formulation déposée à l'étape (3), moyennant quoi on obtient le matériau composite.

13. Procédé selon la revendication 12, dans lequel la matrice polymérique comprend au moins un polymère choisi dans le groupe constitué par un polystyrène, un poly(méthacrylate de méthyle), un polymère fluorocarboné, un polynorbornène et un polyéthylène, le polymère étant de préférence un polystyrène.

14. Procédé selon la revendication 12 ou 13, dans lequel le polymère de la couche revêtant chaque nanoparticule et le polymère de la matrice polymérique sont identiques.

15. Utilisation d'un matériau composite obtenu par la mise en oeuvre du procédé de fabrication selon l'une quelconque des revendications 12 à 14 pour former un film ou une couche magnétique et diélectrique destiné(e) à une antenne.

16. Antenne, comprenant, comme matériau diélectrique, un matériau composite obtenu par la mise en oeuvre du procédé de fabrication selon l'une quelconque des revendications 12 à 14.
